# EUROPÄISCHE PATENTSCHRIFT

(11) **EP 1 364 574 B1**
(45) Veröffentlichungstag und Bekanntmachung des Hinweises auf die Patenterteilung: **08.10.2008**
(21) Anmeldenummer: 03009207.6
(22) Anmeldetag: 23.04.2003
(51) Int. Cl.: A01F 15/07

(54) **Rundballenpresse**
Rotobaler
Presse à balles rondes

(30) Priorität: 23.05.2002 DE 10222715
(43) Veröffentlichungstag der Anmeldung: 26.11.2003
(73) Patentinhaber: DEERE & COMPANY, Moline, Illinois 61265-8098 (US)
(72) Erfinder: Derscheid, Daniel Eric, 70100 Gray (FR); Viaud, Jean, 70100 Gray (FR)
(74) Vertreter: Magin, Ludwig Bernhard

(56) Entgegenhaltungen:
- EP-A- 1 264 531
- DE-A- 2 739 935
- DE-A- 2 807 058
- DE-A- 3 920 377

## Beschreibung

Die Erfindung betrifft eine Rundballenpresse mit einem Pressraum, der von Seitenwänden und Presselementen bedeckt wird, wobei wenigstens eine Seitenwand wenigstens teilweise nachgiebig ausgebildet oder angeordnet ist und wenigstens ein Presselement mittels Schwenkteilen um eine quer verlaufende Schwenkachse schwenkbar ist.

Die DE-A-39 20 377 offenbart eine Rundballenpresse mit einem konstant großen Pressraum, der umfangsseitig von sich horizontal erstreckenden Walzen umgeben ist. Die Walzen einer vorderen Gruppe sind in einem festen Gehäuseteil drehbar gelagert, während die restlichen Walzen in einem rückwärtigen, vertikal schwenkbaren Gehäuseteil drehbar gelagert sind. Der schwenkbare, rückwärtige Gehäuseteil ist mit einem Verriegelungshaken versehen, der sich diametral zu der Mitte der Pressraummitte öffnet. Die Stirnseiten des Pressraums sind von kreisrunden Stirnwänden verschlossen, die mittels einer Welle in einem Schwenkrahmen drehbar gelagert sind. Der Schwenkrahmen kann um zwei Lager nach außen geschwenkt oder in einer inneren Endstellung gehalten werden. Die Arretierung der Schwenkrahmen erfolgt dadurch, dass der Verriegelungshaken den Schwenkrahmen übergreift und nach außen festlegt. Die Seitenwände sind zudem angetrieben, um den Ballenbildungsprozess zu fördern. Wenn gemäß dieser bekannten Vorrichtung infolge der Öffnung des Pressraums die Seitenwände nach außen ausweichen, verringert sich der Druck auf die Stirnflächen des Rundballens und die damit einhergehende Reibung, so dass der Rundballen problemlos aus dem Pressraum herausrollen kann.

Der nur hinsichtlich der Neuheit zu beurteilende Stand der Technik gemäß der EP-1 264 531 offenbart eine Rundballenpresse, deren Seitenwände sich in einem rückwärtigen Bereich aufgrund des Drucks in dem Preßraum spreizen können. Auf einem Schwenkarm sind Anschläge vorgesehen, die die Seitenwände beim Öffnen des Pressraums zusammenziehen und somit an dem Ballen anlegen.

Aus der US-A-4 334 467 ist ebenfalls eine Rundballenpresse, nunmehr allerdings mit variablem Pressraum, bekannt, deren Seitenwände drehbar sind und von denen eine zur Längsmittenachse der Rundballenpresse hin verstellbar ist. Die Verstellung der betreffenden Seitenwand erfolgt mittels eines Hydraulikmotors und hat ebenfalls den Sinn, die Reibkraft auf den Ballen während des Auswurfvorgangs zu verringern.

Das der Erfindung zugrunde liegende Problem wird darin gesehen, dass sich der Schwenkrahmen in einer geeigneten Stellung befinden muß, damit er von dem Verriegelungshaken übergriffen werden kann, bzw. dass der Hydraulikmotor leicht beschädigt werden kann, z. B. undicht wird, wenn die Kräfte auf die betreffenden Seitenwand nicht zentrisch sondern einseitig wirken.

Dieses Problem wird erfindungsgemäss durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise muß der Schwenkteil nicht erst in Deckung mit der Seitenwand gebracht werden und Verbindungsprobleme entstehen nicht. Vielmehr bleiben die ansteigende Fläche und das Folgeglied immer in einer Zwangsbeziehung, und nur die Stärke der aufgrund der Neigung der ansteigenden Fläche sich ergebenden Bewegungen hängt von der Stellung des Schwenkteils ab. Die Neigung der ansteigenden Fläche kann konstant sein, sie kann aber auch variabel verlaufen, z.B. progressiv. Wenn die beteiligten Komponenten also nicht getrennt werden, sondern sich nur die räumliche Beziehung zueinander ändert, kann der betreffende Bereich abgedeckt werden, so dass die ansteigende Fläche nicht verschmutzen oder verstopft wird. Die Bahn kann sowohl rund als auch spiralförmig verlaufen, und es reicht ein Teil eines Kreises aus, der sich z. B. nur über 180 Grad erstreckt. Die ansteigende Fläche wie auch das Folgeglied können aus einem festen Kunststoff bestehen oder beschichtet sein, was Reibung, Geräusche und dergleichen vermeidet oder vermindert. Die Bahn kann sich sehr nahe an der Schwenkachse befinden und z. B. einen Durchmesser von 0,2 - 0,5 m beschreiben. Zum Verringern der Reibkräfte auf den Rundballen reicht es bereits aus, wenn nur eine Seitenwand nach außen ausweichen kann. Die ansteigende Fläche kann an der Seitenwand und das Folgeglied an dem Schwenkteil oder umgekehrt vorgesehen werden.

Befindet sich die Schwenkachse im Mittenbereich des Pressraums und in deren radialer Nähe die Bahn bzw. die ansteigende Fläche, kann jede ansteigende Fläche mit einer geringen Neigung versehen werden, weil anders als bei einer peripher gelegenen Schwenkachse sich die Bahn über ein großes Bogenmaß erstreckt und somit viel Weg zurücklegen kann, um den gewünschten Stellweg zu erreichen.

Wenn die Seitenwand bzw. die Seitenwände mit Versteifungsstreben, z. B. Profilen, Schienen, Rohren, Sicken oder dergleichen biegesteif gestaltet werden, kann die über die ansteigende Fläche eingeleitete Stellkraft gleichmäßig bis zu den Außenbereichen der betreffenden Stirnwand übertragen werden. Der nahezu sternförmige Verlauf der Versteifungsstreben vermeidet ungleiche Biegemomente über den Verlauf der Seitenwände weitgehendst. Einem tangentialen Verlauf steht es nicht entgegen, wenn die Versteifungsstreben unter Belassung einer Öffnung im Zentrum der Schwenkachse zusammenfallen. Die zwischen den Versteifungsstreben belassene Kammer ist geeignet, die ansteigende Fläche und das Folgeglied geschützt in sich aufzunehmen.

Auf die im Stand der Technik verwendeten Gelenke zum verstellbaren Anschließen der Seitenwände an dem Rahmen der Rundballenpresse kann verzichtet werden, wenn die Seitenwand im Anschlußbereich so ausreichend flexibel ist, vielleicht sogar federnd ausgebildet ist, dass sie die Auswärtsbewegung um wenige Grade mit ausreichend vielen Biegewechseln zulässt. Es wäre auch möglich, die Seitenwand in einer federnden bzw. nachgiebigen Aufnahme an dem Rahmen zu halten.

Ausreichend Raum für die Seitenbewegung der Seitenwand einerseits und sichere Anlage der ansteigenden Flächen und des Folgeglieds andererseits werden erreicht, wenn die Schwenkteile auf einer Achse oder Welle schwenkbar gehalten sind, die an einen Rahmen der Rundballenpresse angeordnet ist und mit Abstand zu der Seitenwand endet. Danach umschließt der Rahmen der Rundballenpresse gegebenenfalls mit Verkleidungen etc. die Seitenwände und weist eine Achse oder Welle, also z. B. ein Rohr, ein Vollmaterial oder dergleichen auf, die sich horizontal von außen zu der innen folgenden Seitenwand erstrecken, aber davor endet.

Wenn die äußere Kante der Seitenwände im Schwenkbereich der Schwenkteile deren Schwenkbahn folgt, können ein oder mehrere Presselemente breiter ausgebildet werden als der Pressraum und an der Peripherie der Seitenwände entlang geführt werden.

Mit einer Rundballenpresse mit variablem Pressraum können besonders dichte Rundballen erzeugt werden, so dass bei diesem Maschinentyp der Effekt verstellbarer Seitenwände umso größer ist.

Die während der Verschwenkung des Schwenkteils an den ansteigenden Flächen auftretenden Reibkräfte werden dadurch vermieden oder reduziert, dass an dem Folgeglied Rollen, Räder, Kugeln oder dergleichen vorgesehen sind.

In der Zeichnung ist ein nachfolgend näher beschriebenes Ausführungsbeispiel der Erfindung dargestellt. Es zeigt:
- Fig. 1: eine erfindungsgemäße Rundballenpresse in Seitenansicht in einer geschlossenen Stellung und schematischer Darstellung,
- Fig. 2: die Rundballenpresse nach Figur 1 in einer Ansicht von hinten und in schematischer Darstellung und
- Fig. 3: die Rundballenpresse nach Figur 1 in einer geöffneten Stellung.

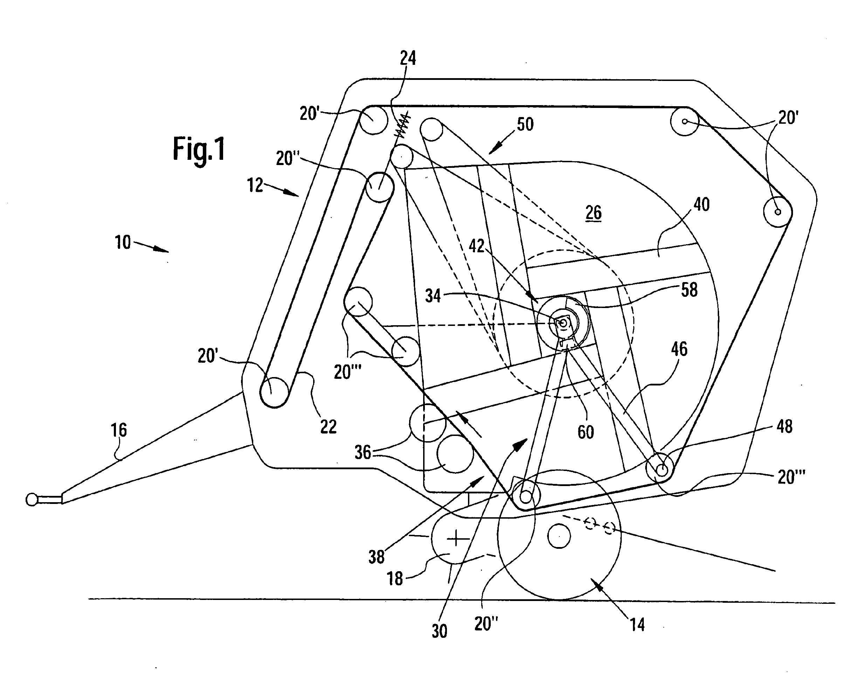

Eine in Figur 1 gezeigte Rundballenpresse 10 enthält einen Rahmen 12, ein Fahrgestell 14, eine Deichsel 16, eine Aufnahmevorrichtung 18, Rollen 20, Presselemente 22, eine Spannvorrichtung 24, Seitenwände 26, einen Pressraum 28, Schwenkteile 30 und eine Drückevorrichtung 32.

Die Rundballenpresse 10 ist in dem dargestellten Ausführungsbeispiel mit einem in der Größe veränderbaren Pressraum 28 versehen, kann aber auch mit einem größenunveränderlichen Pressraum 28 versehen werden. In dem Pressraum 28 wird vom Boden aufgenommenes Erntegut zu einem sogenannten Rundballen geformt, der mit seinen Stirnseiten auf die Seitenwände 26 drückt.

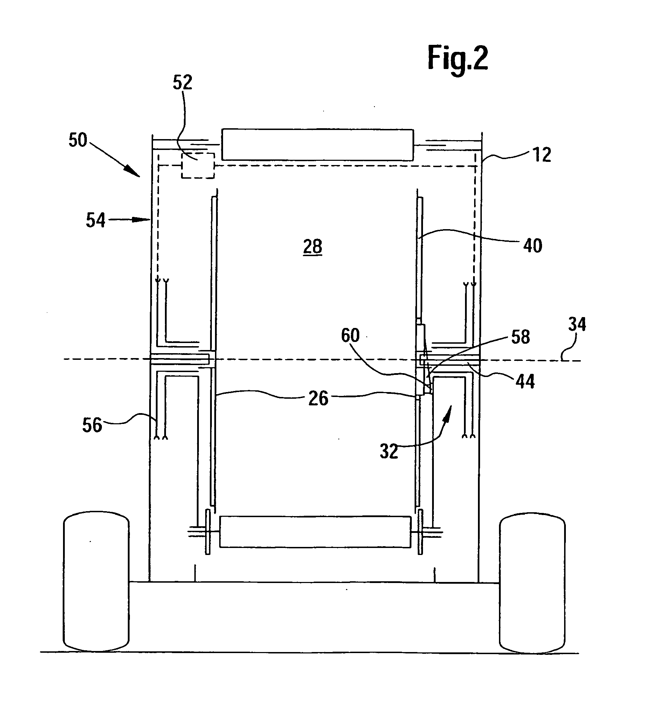

Der Rahmen 12 ist insbesondere in Figur 2 gut zu erkennen und stellt sich als ein Schweiß- und/oder Schraubzusammenbau dar, an dem alle Komponenten der Rundballenpresse 10 befestigt sind, der sich auf dem Fahrgestell 14 abstützt und der mit der Deichsel 16 an ein nicht gezeigtes Zugfahrzeug anschließbar ist. Der Rahmen 12 trägt unter anderem nicht dargestellte Verkleidungsteile, einige der Rollen 20, die Seitenwände 26 und die Schwenkteile 30. Der Rahmen 12 umschließt den von den Seitenwänden 26 und den Presselementen 22 umgebenen Bereich weiträumig.

Das Fahrgestell 14 besteht in nicht näher bezeichneter Weise aus einer Achse und Rädern, auf denen der Rahmen 12 ruht.

Die Deichsel 16 greift an der Vorderseite des Rahmens 12 starr oder höhenverstellbar an.

Die Aufnahmevorrichtung 18 ist in üblicher Weise als eine sogenannte Pick-Up ausgebildet und an den Rahmen 12 höhenverstellbar angeschlossen. Der Aufnahmevorrichtung 18 kann eine ebenfalls an sich bekannte Schneidvorrichtung nachgeordnet werden. Die Aufnahmevorrichtung 18 nimmt auf dem Boden abgelegtes Gut auf und gibt es über eine gegebenenfalls vorhandene Schneidvorrichtung in den Pressraum 28 weiter, wo es zu einem zylindrischen Rundballen geformt wird.

Einige der Rollen 20 sind ortsfest in dem Rahmen 12 drehbar gelagert und werden mit 20' bezeichnet, eine andere Rollen 20 ist gegen die Kraft einer nicht näher bezeichneten Feder verstellbar, damit die Presselemente 22 dem wachsenden Ballendurchmesser nachgeben können, und ist mit 20'' bezeichnet; wieder andere Rollen 20 sind auf Schwenkteilen 30 um eine Schwenkachse 34 schwenkbar. Diese Rollen 20 werden mit 20''' gekennzeichnet und sind derart breit ausgebildet, verlaufen zueinander parallel und sind so angeordnet, dass die Presselemente 22 darüber ablaufen und den Pressraum 28 umschließen können. Neben den Rollen 20 sind auch Walzen 36 vorgesehen, die sich oberhalb einer Eingangsöffnung 38 in den Pressraum 28 befinden, als sogenannte Starterrollen beim Ballenbildungsbeginn funktionieren und auf denen sich ein Teil des Gewichts des Rundballens abstützen kann.

Die Presselemente 22 sind als parallel zueinander verlaufende Riemen ausgebildet, die den Pressraum 28 auf seiner Breite im Wesentlichen bedecken. Statt der Ausbildung als Riemen könnte auch eine als Stabkettenförderer oder als breites Band gewählt werden, wie dies ebenfalls bekannt ist; in diesem Fall wäre also nur ein Presselement vorhanden, was aber ebenfalls unter den Schutzbereich fallen soll. Die Presselemente 22 sind endlos und werden dadurch in Umlaufbewegung versetzt, dass sie reibschlüssig auf wenigstens einer antreibbaren Rolle 20 aufliegen. Die Presselemente 22 bilden im Bereich der Eingangsöffnung 38 eine Brücke, die sich mit zunehmendem Erntegut zu einer nach innen ausweitenden Schlaufe formt und den Rundballen umgibt. Die Presselemente 22 werden dadurch unter Spannung gehalten, dass sie über die lageveränderliche Rolle 20' geführt werden.

Die Spannvorrichtung 24 wird in bekannter Weise dadurch gebildet, dass die Rolle 20' auf einem nicht dargestellten Arm, Schlitten oder dergleichen gegen die Kraft einer Feder geführt ist und stets eine Schlaufe der Presselemente 22 gespannt hält.

Die Seitenwände 26 nehmen im Wesentlichen in einer Ansicht auf Figur 1 die Form eines "D" ein, wobei der rückwärtige und in Figur 1 rechte Endbereich einen Bogen bildet, der im Wesentlichen der Umfangslinie des fertigen Rundballens folgt, d. h. auf einem Teil eines runden Kreisbogens. Die Seitenwände 26 sind grundsätzlich einstückig ausgebildet, d.h. sie sind nicht wie bei herkömmlichen Rundballenpressen entlang einer etwa mittigen vertikalen Ebene geteilt; sie können aber durchaus aus mehreren Teilen zusammen gesetzt werden. Aus Figur 2 geht hervor, dass die Seitenwände 26 einen nicht unbeträchtlichen Abstand zu dem Rahmen 12 einnehmen und somit nach außen ausgelenkt werden können, wie dies nachfolgend beschrieben wird. Die Seitenwände 26 sind mittels Versteifungsstreben 40 biegesteif ausgebildet, wobei die Versteifungsstreben 40 aufgeschraubt oder aufgeschweißt werden können. Gemäß der Darstellung in Figur 2 verlaufen die Versteifungsstreben 40 nahezu sternförmig mit Bezug auf die Schwenkachse 34 und verlaufen tangential an dieser mit geringem Abstand vorbei, um schließlich mehr oder weniger senkrecht aufeinander zu stoßen. Aufgrund dieses Verlaufs schließen sie eine in diesem Ausführungsbeispiel viereckige Kammer 42 ein. In ihrem vorderen Endbereich sind die Seitenwände 26 mit dem Rahmen 12 im Wesentlichen fest verbunden; allerdings ist eine geringe Schwenkbewegung ausgehend von einer Lage gemäß Figur 2 um wenige Grade nach außen dadurch möglich, dass entweder die Seitenwände 26 im Anschlussbereich z. B. aus einem nachgiebigen Blech gebildet sind, oder in einer nachgiebigen Verbindung, z. B. an einem nachgiebigen Flansch oder an federbelasteten Schrauben festgelegt sind. Der Anschluss der Seitenwände 26 an dem Rahmen 12 erfolgt im Wesentlichen entlang einer mehr oder weniger vertikalen Linie am vorderen Ende des Pressraums 28. Im Bereich der Schwenkachse 34 ist jede Seitenwand 26 auf einer Achse 44 geführt, die an dem Rahmen 12 starr befestigt ist und zugleich als Schwenkachse für die Schwenkteile 30 dient.

Anders als in dem gezeigten Ausführungsbeispiel kann der Anschluss der Seitenwand 26 oder Seitenwände 26 auch entlang einer oberen mehr oder weniger waagrechten oder leicht schrägen Linie erfolgen, so dass sich eine nach unten öffnende Divergenz der Seitenwände 26 ergibt, wenn der Rundballen ausgeworfen wird.

Der Pressraum 28 ist in seiner Größe veränderlich und wird am Anfang, d. h. bei leerem Pressraum 28, von einem ungefähr dreieckigen zylindrischen Raum zwischen der Aufnahmevorrichtung 18 und dem Pressmittel 22 und seitlich von den Seitenwänden 26 begrenzt. Mit zunehmend zugeführtem Erntegut erweitert sich der Pressraum 28 und nimmt schließlich einen Querschnitt ein, der im rückwärtigen Bereich der Form der Seitenwände 26 folgt.

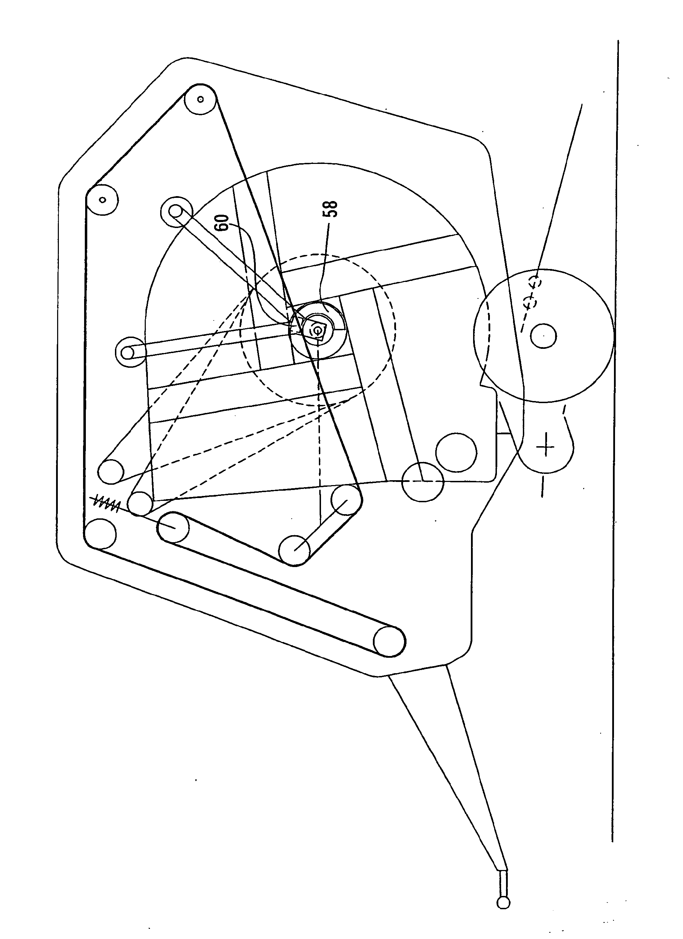

Die Schwenkteile 30 sind in diesem Ausführungsbeispiel auf jeder Seite mit einem oder mehreren radial zu der Schwenkachse 34 verlaufenden Arm(en) 46 und einer oder mehreren an dessen/deren radial außen liegenden Ende angebrachten quer dazu verlaufenden Traverse(n) 48 versehen. Am Ende jeder Traverse 48 ist jeweils eine Rolle 20''' vorgesehen. Die Schwenkteile 30 sind mit dem radial innenliegenden Ende jedes Arms 46 schwenkbar auf der Achse 44 angeordnet. Die Stellung der Arme 46 wird mittels eines Antriebs 50 gesteuert, der einen Motor 52 und pro Schwenkteil 30 ein Zugmittelgetriebe 54 oder einen sonstigen Schwenkantrieb enthält. Der Motor 52 kann in seinen jeweiligen Stellungen gebremst werden und hält die Arme 46 entsprechend ortsfest. Den jeweiligen Zugmittelgetrieben 54 zugehörige Abtriebsräder 56 sind konzentrisch zueinander und zu der Achse 44 gelagert und drehfest mit jeweils einem Schwenkteil 30 verbunden. Die Steuerung der Schwenkteile 30 erfolgt derart, dass der vordere Schwenkteil 30 während der Ballenbildungsphase verstellt wird, um bei der Bildung eines Ballenkerns zu helfen, und dass der rückwärtige Schwenkteil 30 eine untere Lage einnimmt, während der Rundballen gebildet wird, und eine oberen Lage, wenn er ausgeworfen wird. Die beiden Endlagen des rückwärtigen Schwenkteils 30 sind in den Figuren 1 und 3 dargestellt. Es wird darauf hingewiesen, dass der vordere Schwenkteil 30 nicht unbedingt erforderlich ist.

Die soweit beschriebene Rundballenpresse ist im Wesentlichen in allen Einzelheiten in der europäischen Patentanmeldung EP-1 264 531-A1 beschrieben.

Die Drückevorrichtung 32 enthält eine ansteigende Fläche 58 und ein Folgeglied 60 (sh. den Ausbruch zu Figur 2 mit einer Seitenansicht hierzu) und dient dazu, zum und beim Auswerfen des Rundballens den Druck und damit die Reibung der Seitenwände 26 auf dessen Stirnflächen zu verringern, so daß der Rundballen leichter aus dem Pressraum 28 entladen werden kann.

Die ansteigende Fläche 58 ist auf einem zu der Schwenkachse 34 konzentrisch verlaufenden Kreisbogen gelegen und an der Außenseite beider Seitenwände 26 befestigt, wenn es auch ausreichend wäre, nur eine ansteigende Fläche, d. h. an einer Seitenwand 26 vorzusehen. In dem vorliegenden Ausführungsbeispiel ist die ansteigende Fläche 58 aus einem gebogenen Stahlkeil gebildet, der gleichmäßig ansteigend innerhalb der Kammer 42 auf die Seitenwände 26 aufgeschraubt ist.

Das Folgeglied 60 ist auf der der Längsmittenebene der Rundballenpresse 10 zugelegenen Seite des Arms 46 des rückwärtigen Schwenkteils 30 vorgesehen und als Gleitfläche ausgebildet. Zur Minimierung der Reibung werden die Reibflächen geschmiert; alternativ kann das Folgeglied 60 auch als Rad, Rolle, Kugel oder dergleichen drehendes Glied ausgebildet werden. Das Folgeglied 60 ist derart angeordnet, dass es bei einer Drehung des Schwenkteils 30 um die Schwenkachse 34 eine runde Kreisbahn beschreibt und sich auf der ansteigenden Fläche 58 bewegt. Vorzugsweisen befindet sich das Folgeglied 60 stets in Anlage auf der ansteigenden Fläche 58.

Das Folgeglied 60 liegt auf der höchsten Erhebung der ansteigenden Fläche 58 auf, wenn sich die rückwärtigen Schwenkteile 30 in ihrer unteren Endstellung befinden - sh. Figur 1 - und der Rundballen erzeugt werden kann. Wenn die Schwenkteile 30 in ihre obere und in Figur 3 gezeigte Stellung gebracht werden, in der der Rundballen aus dem Pressraum 28 entlassen werden kann, wird das Folgeglied 60 zu der niedrigsten Stelle der ansteigenden Fläche 58 bewegt. Der Unterschied zwischen der höchsten und der niedrigsten Stelle kann z. B. ca. 20 - 50 mm betragen.

Sobald in dem Pressraum 28 ein Rundballen gebildet ist, wird der rückwärtige Schwenkteil 30 angehoben, worauf sich aufgrund des in dem Pressraum 28 herrschenden Drucks ausgehend von dem gepressten Erntegut die Seitenwände 26 nach außen bewegen. Infolgedessen verringert sich die Reibung zwischen der Innenseite der Seitenwände 26 und den Stirnflächen des Rundballens und letzterer fällt aufgrund der Schwerkraft aus dem Pressraum 28. Sobald der Rundballen den Pressraum 28 verlassen hat und die Rundballenpresse 10 soweit weiterbewegt worden ist, dass der rückwärtige Schwenkteil 30 wieder abgesenkt werden kann, erfolgt eine Schwenkbewegung des rückwärtigen Schwenkteils 30 in der entgegensetzten Richtung, so dass das Folgeglied 60 zur größten Erhebung der ansteigenden Fläche 58 bewegt wird und dabei die Seitenwände 26 nach innen drückt.

## Patentansprüche

1. Rundballenpresse (10) mit einem Pressraum (28), der von Seitenwänden (26) und Presselementen (22) bedeckt wird, wobei wenigstens eine Seitenwand (26) wenigstens teilweise nachgiebig ausgebildet oder angeordnet ist und wenigstens ein Presselement (22) mittels wenigstens einem Schwenkteil (30) um eine quer verlaufende Schwenkachse (34) schwenkbar ist, **dadurch gekennzeichnet, dass** die Schwenkachse (34) die Seitenwände (26) durchdringt und auf einer Bahn um die Schwenkachse (34) wenigstens eine in Schließrichtung des Pressraums (28) ansteigende Fläche (58) und ein darauf bewegbares Folgeglied (60) an dem Schwenkteil (30) und einer Seitenwand (26) vorgesehen sind.

2. Rundballenpresse nach Anspruch 1, **dadurch gekennzeichnet, dass** die Schwenkachse (34) im Mittenbereich des Pressraums (28) angeordnet ist.

3. Rundballenpresse nach Anspruch 1 oder 2, **dadurch gekennzeichnet, dass** die betreffende Seitenwand (26) mit im Wesentlichen tangential zu der Schwenkachse (34) verlaufenden Versteifungsstreben (40) versehen ist.

4. Rundballenpresse nach einem oder mehreren der vorherigen Ansprüche, **dadurch gekennzeichnet, dass** die betreffende Seitenwand (26) mit einem Endbereich fest an einen Rahmen (12) der Rundballenpresse (10) angeschlossen und in sich ausreichend flexibel ist, um die erforderliche Seitenbewegung auszuführen, oder dass die Verbindung zwischen der Seitenwand (26) und dem Rahmen (12) flexibel ausgeführt ist.

5. Rundballenpresse nach einem oder mehreren der vorherigen Ansprüche, **dadurch gekennzeichnet, dass** der Schwenkteil (30) auf einer Achse (44) oder Welle schwenkbar gehalten ist, die an einen Rahmen (12) der Rundballenpresse (10) angeordnet ist und mit Abstand zu der Seitenwand (26) endet.

6. Rundballenpresse nach einem oder mehreren der vorherigen Ansprüche, **dadurch gekennzeichnet, dass** die äußeren Kanten der Seitenwände (26) im Schwenkbereich des Schwenkteils (30) dessen Schwenkbahn folgen.

7. Rundballenpresse nach einem oder mehreren der vorherigen Ansprüche, **dadurch gekennzeichnet, dass** der Pressraum (28) in seiner Größe veränderlich ist.

8. Rundballenpresse nach einem oder mehreren der vorherigen Ansprüche, **dadurch gekennzeichnet, dass** das Folgeglied (60) mit einer Rolle versehen ist.

## Claims

1. Rotobaler (10) with a baling chamber (28) which is covered by side walls (26) and baling elements (22), wherein at least one side wall (26) is designed or arranged in an at least partially flexible manner, and at least one baling element (22) can be pivoted about a transversely running pivot axis (34) by means of at least one pivoting part (30), **characterized in that** the pivot axis (34) penetrates the side walls (26) and, on a path about the pivot axis (34), at least one surface (58) which rises in the closing direction of the baling chamber (28) and a follow-up element (60) which is movable on said surface are provided on the pivoting part (30) and a side wall (26).

2. Rotobaler according to Claim 1, **characterized in that** the pivot axis (34) is arranged in the central region of the baling chamber (28).

3. Rotobaler according to Claim 1 or 2, **characterized in that** the side wall (26) in question is provided with stiffening struts (40) running substantially tangentially to the pivot axis (34).

4. Rotobaler according to one or more of the preceding claims, **characterized in that** the side wall (26) in question is connected fixedly by an end region to a frame (12) of the rotobaler (10) and is sufficiently flexible in itself in order to execute the required lateral movement, or **in that** the connection between the side wall (26) and the frame (12) is designed to be flexible.

5. Rotobaler according to one or more of the preceding claims, **characterized in that** the pivoting part (30) is held pivotably on a spindle (44) or shaft which is arranged on a frame (12) of the rotobaler (10) and ends at a distance from the side wall (26).

6. Rotobaler according to one or more of the preceding claims, **characterized in that** the outer edges of the side walls (26) follow the pivoting path of the pivoting part (30) in the pivoting region thereof.

7. Rotobaler according to one or more of the preceding claims, **characterized in that** the size of the baling chamber (28) can be varied.

8. Rotobaler according to one or more of the preceding claims, **characterized in that** the follow-up element (60) is provided with a roller.

## Revendications

1. Presse à balles rondes (10) comprenant une chambre de presse (28) qui est couverte par des parois latérales (26) et des éléments de presse (22), au moins une paroi latérale (26) étant réalisée ou agencée de manière au moins partiellement flexible et au moins un élément de presse (22) pouvant pivoter au moyen d'au moins une partie pivotante (30) autour d'un axe de pivotement (34) s'étendant transversalement, **caractérisée en ce que** l'axe de pivotement (34) traverse les parois latérales (26) et **en ce que**, sur une piste autour de l'axe de pivotement (34), au moins une surface (58) montant dans la direction de fermeture de la chambre de presse (28) et un organe suiveur (60) mobile par-dessus elle sont prévus sur la partie pivotante (30) et sur une paroi latérale (26).

2. Presse à balles rondes selon la revendication 1, **caractérisée en ce que** l'axe de pivotement (34) est disposé dans la région centrale de la chambre de presse (28).

3. Presse à balles rondes selon la revendication 1 ou 2, **caractérisée en ce que** la paroi latérale concernée (26) est pourvue de supports de renforcement (40) s'étendant essentiellement tangentiellement à l'axe de pivotement (34).

4. Presse à balles rondes selon l'une quelconque ou plusieurs des revendications précédentes, **caractérisée en ce que** la paroi latérale concernée (26) est raccordée par une région d'extrémité fixement à un cadre (12) de la presse à balles rondes (10) et est en soi suffisamment flexible pour assurer le mouvement latéral requis, ou **en ce que** la connexion entre la paroi latérale (26) et le cadre (12) est réalisée sous forme flexible.

5. Presse à balles rondes selon l'une quelconque ou plusieurs des revendications précédentes, **caractérisée en ce que** la partie pivotante (30) est maintenue de manière pivotante sur un axe (44) ou un arbre, qui est disposé sur un cadre (12) de la presse à balles rondes (10) et qui se termine à distance de la paroi latérale (26).

6. Presse à balles rondes selon l'une quelconque ou plusieurs des revendications précédentes, **caractérisée en ce que** les arêtes extérieures des parois latérales (26) suivent la piste de pivotement de la partie pivotante (30) dans sa région de pivotement.

7. Presse à balles rondes selon l'une quelconque ou plusieurs des revendications précédentes, **caractérisée en ce que** la chambre de presse (28) a une taille variable.

8. Presse à balles rondes selon l'une quelconque ou plusieurs des revendications précédentes, **caractérisée en ce que** l'organe suiveur (60) est pourvu d'un rouleau.
